# EUROPEAN PATENT APPLICATION

(11) **EP 4 759 378 A1**
(43) Date of publication of application: **17.06.2026**
(21) Application number: 24938656.6
(22) Date of filing: 16.12.2024
(51) Int. Cl.: A62C 3/16

(54) **ENERGY STORAGE CONTAINER PROVIDED WITH INDEPENDENT FIRE-FIGHTING MODULE**

(30) Priority: 13.05.2024 CN 202421034222 U
(71) Applicant: Eve Energy Co., Ltd, Huizhou, Guangdong 516006 (CN)
(72) Inventor: HU, Ao, Wuhan, Hubei 430200 (CN); JIANG, Min, Wuhan, Hubei 430200 (CN); WANG, Mengchun, Wuhan, Hubei 430200 (CN); XU, Xiaowei, Wuhan, Hubei 430200 (CN)
(74) Representative: Michalski Hüttermann & Partner mbB
(86) International application number: PCT/CN2024/139545
(87) International publication number: WO 2025/236652

(57) **Abstract**

The present disclosure discloses an application relating to an energy storage container with an independent fire-fighting module. The energy storage container includes a container body and one or more independent fire-fighting module. The container body is provided with one or more battery clusters therein. Each of the one or more independent fire-fighting modules is individually provided with a fire-extinguishing medium. Each of the one or more independent fire-fighting modules is provided with a nozzle for spraying the fire-extinguishing medium. The one or more independent fire-fighting modules are disposed in the container body.

## Description

### CROSS-REFERENCE TO RELATED APPLICATION(S)

This application claims priority to Chinese Patent Application No. 2024210342220, filed with the China National Intellectual Property Administration on May 13, 2024, the entire disclosure of which is hereby incorporated by reference.

### TECHNICAL FIELD

This disclosure relates to the field of battery technology, and in particular, to an energy storage container with an independent fire-fighting module.

### BACKGROUND

At present, a commonly used fire-fighting solution in an energy storage container generally adopts a fire-fighting structure consisting of a fire-fighting bottle and a fire-fighting pipe network. A fire-fighting medium is stored in the fire-fighting bottle and delivered to a spray outlet through a pipeline arranged in the container. When a fire occurs, a detector transmits information to a fire-fighting host to control the fire-fighting bottle to release the fire-fighting medium, and the fire-fighting medium spreads to the entire container through the fire-fighting pipe network.

### TECHNICAL PROBLEM

In the described fire-fighting structure, the fire-fighting pipeline and the fire-fighting bottle occupy a large amount of interior space of the container. In addition, the pipeline is arranged from the fire-fighting bottle located in an electrical compartment to a region above a battery cluster, resulting in a relatively long routing distance and passing through multiple turning points and pipeline connection points. Each turning point and connection point introduces a risk and accident point to a fire-fighting system.

### TECHNICAL SOLUTION

An energy storage container with an independent fire-fighting module is provided in the present disclosure. The energy storage container includes a container body and one or more independent fire-fighting modules. The container body is provided with one or more battery clusters therein. Each of the one or more independent fire-fighting modules is individually provided with a fire-extinguishing medium therein. Each of the one or more independent fire-fighting modules is provided with a nozzle for spraying the fire-extinguishing medium. The one or more independent fire-fighting modules are disposed in the container body.

### ADVANTAGEOUS EFFECTS

The energy storage container of the present disclosure abandons the commonly used fire-fighting structure consisting of the fire-fighting bottle and the fire-fighting pipe network, eliminating the fire-fighting bottle and the fire-fighting pipe network. Instead, a new fire-fighting structure is re-arranged, in which the fire-extinguishing medium is directly built into an independent fire-fighting module, and one or more independent fire-fighting modules are directly distributed inside the container body. When thermal runaway occurs, the one or more independent fire-fighting modules can be triggered to directly spray the fire-extinguishing medium. In addition, the fire-extinguishing medium can also be closer to the fire point, enabling a faster response and allowing for a more flexible and diversified arrangement. Meanwhile, the elimination of the fire-fighting bottle and the fire-fighting pipe network can also save the space inside of the container body to a certain extent, thereby increasing the battery capacity of the energy storage container. Furthermore, the risk of high-pressure storage of the fire-fighting bottle is also eliminated, thereby improving the safety performance of the present energy storage container.

### BRIEF DESCRIPTION OF THE DRAWINGS

FIG. 1 is a schematic structural view of a fire-fighting structure in an energy storage container according to some embodiments of the present disclosure.
FIG. 2 is a partial enlarged view of FIG. 1 at Circle A.
FIG. 3 is a top view of a fire-fighting structure in an energy storage container according to some embodiments of the present disclosure.
FIG. 4 is a front view of a fire-fighting structure in an energy storage container according to some embodiments of the present disclosure.

Accompanying drawings: 1 - independent fire-fighting module, 11 - nozzle, 12 - filling port, 2 - fire-fighting host, 3 - temperature sensor, 4 - smoke sensor, 5 - hydrogen detector, 6 - carbon dioxide detector, 7 - wire, 8 - intake fan, 9 - exhaust fan.

### DETAILED DESCRIPTION

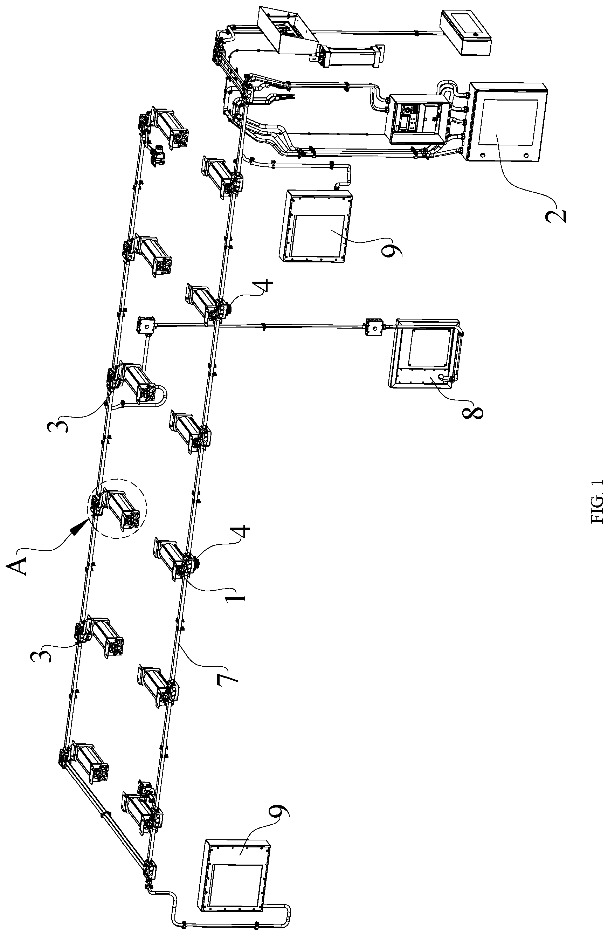

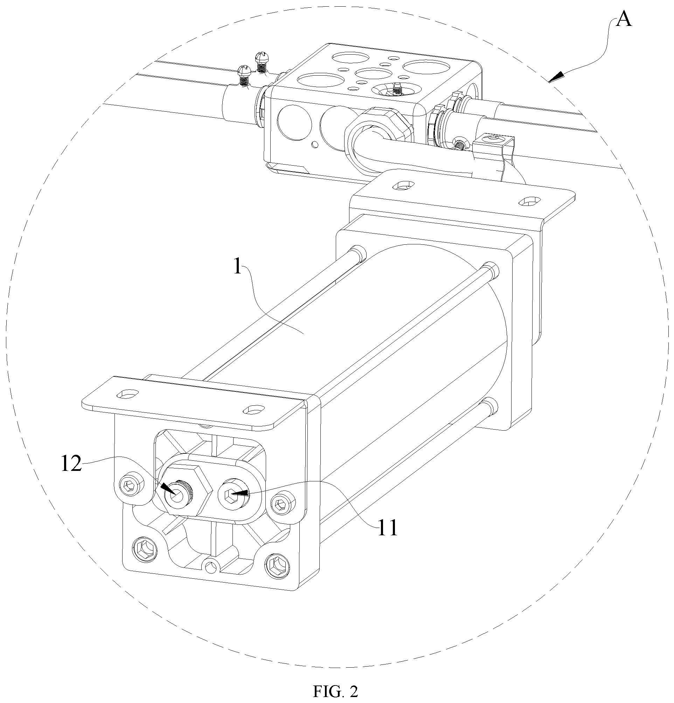

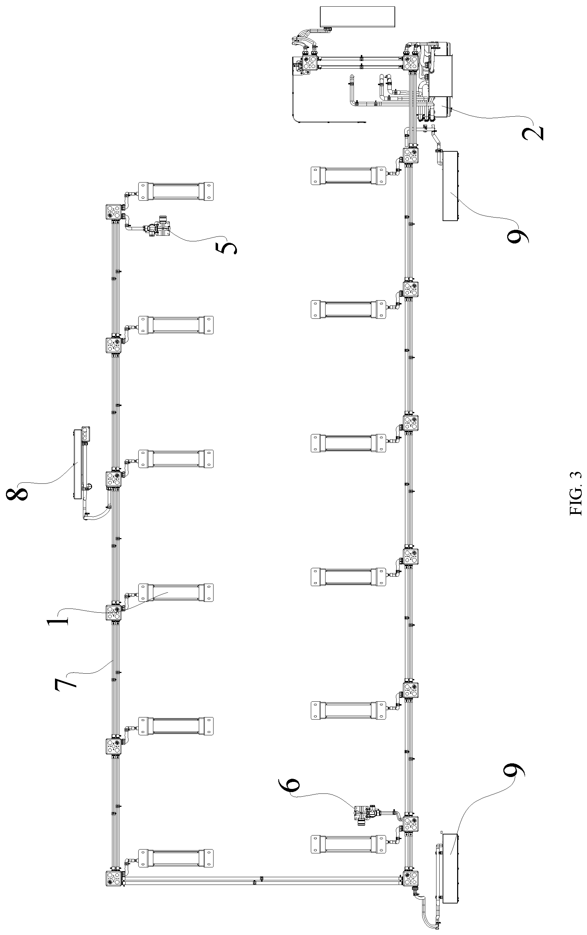

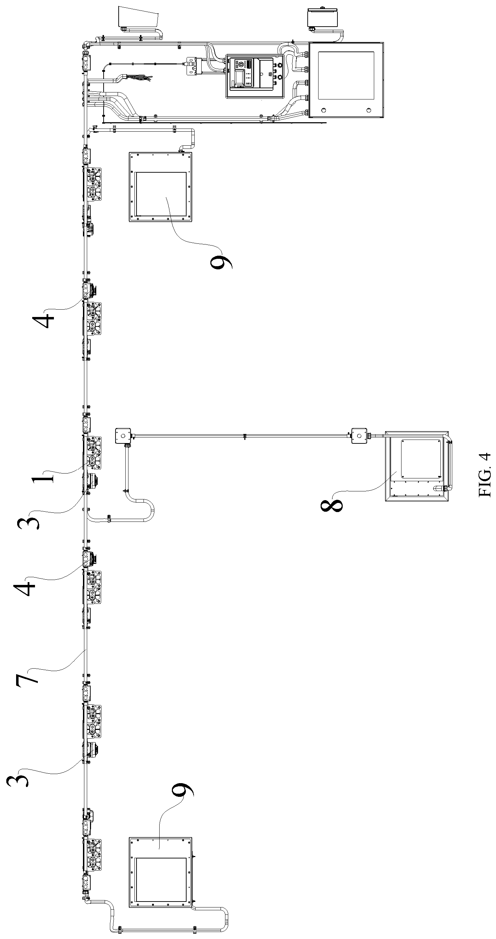

An energy storage container is disclosed in embodiments of the present disclosure. Referring to FIG. 1 to FIG. 4, the energy storage container specifically includes a container body. The container body is provided with one or more battery clusters therein.

The energy storage container specifically further includes one or more independent fire-fighting modules 1. Each independent fire-fighting module 1 is individually provided with a fire-extinguishing medium. Each independent fire-fighting module 1 is provided with a nozzle 11 for spraying the fire-extinguishing medium. The one or more independent fire-fighting modules 1 are disposed in the container body.

In this specific embodiment, the energy storage container abandons the existing fire-fighting structure consisting of a fire-fighting bottle and a fire-fighting pipe network, eliminating the fire-fighting bottle and the fire-fighting pipe network. Instead, a new fire-fighting structure is re-arranged, in which the fire-extinguishing medium is directly built into an independent fire-fighting module 1, and one or more independent fire-fighting modules 1 are directly distributed inside the container body. When thermal runaway occurs, the one or more independent fire-fighting modules can be triggered to directly spray the fire-extinguishing medium. In addition, the fire-extinguishing medium can also be closer to the fire point, enabling a faster response and allowing for a more flexible and diversified arrangement. Meanwhile, the elimination of the fire-fighting bottle and the fire-fighting pipe network can also save the space inside of the container body to a certain extent, thereby increasing the battery capacity of the energy storage container. Furthermore, the risk of high-pressure storage of the fire-fighting bottle is also eliminated, thereby improving the safety performance of the present energy storage container.

In some implementations, the independent fire-fighting module 1 may be a perfluorohexanone fire-extinguishing apparatus.

In some implementations, the one or more independent fire-fighting modules 1 are disposed on the inner top of the container body and/or the inner bottom of the container body. In this specific embodiment, the independent fire-fighting module 1 can be specifically disposed on the inner top or inner bottom of the container, so as to better extinguish a battery cluster undergoing thermal runaway.

In some implementations, the one or more independent fire-fighting modules 1 are disposed in a one-to-one correspondence with the one or more battery clusters in position. In this specific embodiment, the one or more independent fire-fighting modules 1 may specifically be disposed in a one-to-one correspondence with the one or more battery clusters in position. When thermal runaway occurs, the one or more independent fire-fighting modules 1 can more accurately extinguish a battery cluster, thereby improving the efficiency and flexibility of fire extinguishment.

In some implementations, the energy storage container further includes a fire-fighting host 2. The fire-fighting host 2 is electrically connected to the one or more independent fire-fighting modules 1. When thermal runaway occurs in the energy storage container, all of the one or more independent fire-fighting modules 1 are controlled by the fire-fighting host 2 to spray the fire-extinguishing medium. In this specific embodiment, the one or more independent fire-fighting modules 1 are triggered specifically by a fire-fighting host 2. For example, each independent fire-fighting module 1 is communicated with the fire-fighting host 2 through a wire 7. When thermal runaway occurs, the fire-fighting host 2 sends a start electrical signal to trigger all independent fire-fighting modules 1 to spray fire-extinguishing medium.

Of course, in some other implementations, when thermal runaway occurs in the energy storage container, a single independent fire-fighting module 1 can also be controlled by the fire-fighting host 2 to spray the fire-extinguishing medium. In this specific embodiment, when thermal runaway occurs, the fire-fighting host 2 in the energy storage container can send an electrical signal according to a specific thermal runaway position, to individually trigger an independent fire-fighting module 1 at the specific position to spray the fire-extinguishing medium.

In some implementations, a temperature sensor 3 is provided beside at least one independent fire-fighting module 1. The fire-fighting host 2 is electrically connected to the temperature sensor 3. The temperature sensor 3 is configured to detect the temperature inside the energy storage container. In this specific embodiment, whether thermal runaway occurs in the energy storage container can be detected by providing the temperature sensor 3. Specifically, whether the temperature inside the energy storage container abnormally rises is detected by the temperature sensor 3. When the temperature sensor 3 detects that the temperature inside the energy storage container abnormally rises and exceeds a normal temperature threshold, it can be determined that thermal runaway occurs accordingly. Meanwhile, the fire-fighting host 2 obtains a specific detected temperature of the temperature sensor 3 in real time. When obtaining a temperature signal of an abnormally high temperature, the fire-fighting host 2 sends a start electrical signal to trigger all independent fire-fighting modules 1 to spray the fire-extinguishing medium, so as to prevent the spread of thermal runaway.

Of course, in some other implementations, multiple temperature sensors 3 may be provided. The specific temperatures are detected by the temperature sensors 3 at different positions. The fire-fighting host 2 can determine, according to the specific temperatures detected by these temperature sensors 3, a position where thermal runaway occurs. The fire-fighting host 2 then sends an electrical signal to individually trigger an independent fire-fighting module 1 at a corresponding position to spray the fire-extinguishing medium.

In some implementations, a smoke sensor 4 is provided beside at least one of the one or more independent fire-fighting modules 1. The fire-fighting host 2 is electrically connected to the temperature sensor 3. The smoke sensor 4 is configured to detect a smoke concentration inside the energy storage container. In a specific embodiment, whether thermal runaway occurs may also be detected specifically by providing the smoke sensor 4. Specifically, whether the smoke concentration inside the energy storage container is abnormal is detected specifically by the smoke sensor 4. When the smoke sensor 4 detects that the smoke concentration inside the energy storage container is abnormal, that is, the smoke concentration inside the energy storage container exceeds a normal concentration threshold, it can be determined that thermal runaway occurs accordingly. Meanwhile, the fire-fighting host 2 obtains a specific detection concentration of the smoke sensor 4 in real time. When obtaining an abnormal smoke concentration, the fire-fighting host 2 sends a start electrical signal to trigger all the independent fire-fighting modules 1 to spray the fire-extinguishing medium.

Of course, in other implementations, multiple smoke sensors 4 may be provided. The specific smoke concentrations are detected by the smoke sensors 4 at different positions. The fire-fighting host 2 can determine, according to the specific smoke concentrations detected by these smoke sensors 4, a position where thermal runaway occurs. The fire-fighting host 2 then sends an electrical signal to individually trigger an independent fire-fighting module 1 at a corresponding position to spray the fire-extinguishing medium.

In some implementations, the container body is provided with a hydrogen detector 5 therein. The hydrogen detector 5 is configured to detect a hydrogen concentration inside the energy storage container. The hydrogen detector 5 is electrically connected to the fire-fighting host 2. In this specific embodiment, since the batteries in the related art mainly adopt acidic and alkaline batteries such as lead-acid batteries, it is necessary to recharge the batteries after use to restore their capacity. During charging, a certain amount of hydrogen is discharged from the battery compartment. As hydrogen is a flammable gas, if it is not detected by personnel in time, it is likely to cause life risks to personnel and may also cause damage to the device. Therefore, the hydrogen detector 5 is provided to monitor the hydrogen concentration inside the energy storage container. Once an excessive amount of hydrogen is detected, timely measures can be taken to maintain the stability of the internal environment of the energy storage container, thereby avoiding accidental occurrence. Meanwhile, when thermal runaway occurs in the battery, gases such as carbon dioxide (CO₂), hydrogen (H₂), and carbon monoxide (CO) may be generated. The hydrogen detector 5 may also be configured to detect whether thermal runaway occurs in the container body. In some implementations, the hydrogen detector 5 may be a hydrogen sensor.

In some implementations, the container body is provided with a carbon dioxide detector 6 therein. The carbon dioxide detector 6 is configured to detect a carbon dioxide concentration inside the energy storage container. The carbon dioxide detector 6 is electrically connected to the fire-fighting host 2. In this specific embodiment, when thermal runaway occurs in the battery, gases such as CO₂, H₂, and CO may be generated, and therefore the carbon dioxide detector 6 may be specifically configured to detect whether thermal runaway occurs in the container body. In some implementations, the carbon dioxide detector 6 may be a carbon dioxide sensor.

In some other implementations, the energy storage container further includes a fire-fighting host 2. The fire-fighting host 2 is electrically connected to the one or more independent fire-fighting modules 1. Each of the one or more independent fire-fighting modules 1 is provided with a heat sensitive line for individually triggering spraying of the fire-extinguishing medium. When any one of the one or more independent fire-fighting modules 1 is triggered, the fire-fighting host 2 is configured to receive a trigger signal to control all of rest of the one or more independent fire-fighting modules 1. In this specific embodiment, in addition to the described method of triggering independent fire-fighting modules 1 to spray the fire-extinguishing medium by means of different types of sensors, the heat sensitive line for triggering can also be individually provided on each independent fire-fighting module 1, so that each independent fire-fighting module 1 can be individually triggered without relying on any sensor. Meanwhile, once one independent fire-fighting module 1 is triggered, the fire-fighting host 2 will trigger all the remaining independent fire-fighting modules 1 together to prevent the spread of thermal runaway.

It should be noted that the existing fire-fighting system relies on a single triggering method and is heavily dependent on the detectors inside the energy storage container to trigger the fire-fighting host 2. If the detector inside the energy storage container malfunctions, or if direct communication between the fire-fighting host 2 and the detector fails, the fire-fighting system will not be actively triggered. As a result, the triggering time of the fire-fighting system can be seriously affected, and the safety protection of the entire container can be further threatened. In contrast, for the energy storage container of the present disclosure, not only are multiple types of sensors employed to detect occurrence of thermal runaway to trigger the fire-fighting host 2, but also the self-triggered heat sensitive line is individually provided on the independent fire-fighting module 1, thereby improving the safety protection performance of the energy storage container.

In some implementations, the one or more independent fire-fighting modules 1 are arranged at least in two columns in the width direction of the container body, and independent fire-fighting modules 1 in each column are arranged at intervals in the length direction of the container body. In this specific embodiment, specifically, the one or more independent fire-fighting modules 1 are evenly and dispersedly disposed, so that the independent fire-fighting modules 1 can cover the sides of different battery clusters more comprehensively, thereby improving the safety performance of the energy storage container.

In some implementations, the energy storage container further includes an intake fan 8 and an exhaust fan 9, which are configured for flow of gases inside the container body. In this specific embodiment, by providing the intake fan 8 and the exhaust fan 9, the flow of gases inside the container body can be ensured, thereby avoiding an adverse effect caused by excessive accumulation of gases inside the container body.

In some implementations, two exhaust fans 9 may be specifically provided. The intake fan 8 may be disposed between the two exhaust fans 9, so that the exhaust capacity can be improved, and the gases can be ensured to flow sufficiently.

In some implementations, each of the one or more independent fire-fighting modules 1 is provided with a filling port 12 for filling the fire-extinguishing medium. The filling port 12 and the nozzle 11 are provided at the same side of one of the one or more independent fire-fighting modules 1. In this specific embodiment, by specifically providing the filling port 12 and the nozzle 11 on the same side of the independent fire-fighting module 1, the structure is more compact, so as to facilitate operation by the personnel.

## Claims

1. An energy storage container with an independent fire-fighting module, comprising:
a container body provided with one or more battery clusters therein; and
one or more independent fire-fighting modules (1), wherein each of the one or more independent fire-fighting modules (1) is individually provided with a fire-extinguishing medium therein, each of the one or more independent fire-fighting modules (1) is provided with a nozzle (11) for spraying the fire-extinguishing medium, and the one or more independent fire-fighting modules (1) are disposed in the container body.

2. The energy storage container with an independent fire-fighting module of claim 1, wherein the one or more independent fire-fighting modules (1) are disposed on an inner top of the container body and/or an inner bottom of the container body.

3. The energy storage container with an independent fire-fighting module of claim 1, wherein the one or more independent fire-fighting modules (1) are disposed in a one-to-one correspondence with the one or more battery clusters in position.

4. The energy storage container with an independent fire-fighting module of any one of claims 1 to 3, further comprising a fire-fighting host (2), wherein the fire-fighting host (2) is electrically connected to the one or more independent fire-fighting modules (1); and
when thermal runaway occurs in the energy storage container, all of the one or more independent fire-fighting modules (1) are controlled by the fire-fighting host (2) to spray the fire-extinguishing medium.

5. The energy storage container with an independent fire-fighting module of any one of claims 1 to 3, further comprising a fire-fighting host (2), wherein the fire-fighting host (2) is electrically connected to the one or more independent fire-fighting modules (1); and
each of the one or more independent fire-fighting modules (1) is provided with a heat sensitive line for individually triggering spraying of the fire-extinguishing medium, and when any one of the one or more independent fire-fighting modules (1) is triggered, the fire-fighting host (2) is configured to receive a trigger signal to control all of rest of the one or more independent fire-fighting modules (1).

6. The energy storage container with an independent fire-fighting module of claim 4, wherein a temperature sensor (3) is provided beside at least one of the one or more independent fire-fighting modules (1), the fire-fighting host (2) is electrically connected to the temperature sensor (3), and the temperature sensor (3) is configured to detect a temperature inside the energy storage container.

7. The energy storage container with an independent fire-fighting module of claim 4, wherein a smoke sensor (4) is provided beside at least one of the one or more independent fire-fighting modules (1), the fire-fighting host (2) is electrically connected to the temperature sensor (3), and the smoke sensor (4) is configured to detect a smoke concentration inside the energy storage container.

8. The energy storage container with an independent fire-fighting module of claim 4, wherein the container body is provided with a hydrogen detector (5) therein, the hydrogen detector (5) is configured to detect a hydrogen concentration inside the energy storage container, and the hydrogen detector (5) is electrically connected to the fire-fighting host (2); and/or
the container body is provided with a carbon dioxide detector (6) therein, the carbon dioxide detector (6) is configured to detect a carbon dioxide concentration inside the energy storage container, and the carbon dioxide detector (6) is electrically connected to the fire-fighting host (2).

9. The energy storage container with an independent fire-fighting module of any one of claims 1 to 3 and 6 to 8, wherein the one or more independent fire-fighting modules (1) are arranged at least in two columns in a width direction of the container body, and independent fire-fighting modules (1) in each column are arranged at intervals in a length direction of the container body.

10. The energy storage container with an independent fire-fighting module of any one of claims 1 to 3 and 6 to 8, wherein each of the one or more independent fire-fighting modules (1) is provided with a filling port (12) for filling the fire-extinguishing medium, and the filling port (12) and the nozzle (11) are provided at a same side of one of the one or more independent fire-fighting modules (1).
